# EUROPÄISCHE PATENTANMELDUNG

(11) **EP 0 925 997 A2**
(43) Veröffentlichungstag der Anmeldung: **30.06.1999**
(21) Anmeldenummer: 98250445.8
(22) Anmeldetag: 22.12.1998
(51) Int. Cl.: B60N 2/42, B60N 2/48

(54) **Sicherheits-Fahrzeugsitz**

(30) Priorität: 23.12.1997 DE 19757533
(71) Anmelder: Brose Fahrzeugteile GmbH & Co. KG Coburg, 96450 Coburg (DE)
(72) Erfinder: Seliger, Tillmann, 96052 Bamberg (DE); Liebetrau, Matthias, 96450 Coburg (DE); Sesselmann, Helmut, 96523 Steinach (DE); Dumbser, Gerhard, 97464 Niederwerrn (DE)
(74) Vertreter: Baumgärtel, Gunnar

(57) **Zusammenfassung**

Die Erfindung betrifft einen Sicherheits-Fahrzeugsitz, bei dem infolge des Heckaufpralls zumindest ein Teil der Kopfstütze nach vorn bewegt wird, um den nach hinten geschleuderten Kopf des Insassen abzufangen.

Nachteilig an den bekannten Lösungen sind die langen Ansprechzeiten der Systeme, was die Sicherheitswirkung mindert. Bei starken Crashs ist die auslösende Kraft relativ hoch , so daß die Kopfstütze zu stark beschleunigt wird. Dadurch kommt es zu einer erheblichen Krafteinwirkung beim Auftreffen der Kopfstütze auf den Hinterkopf des Insassen.

Aufgabe der Erfindung ist es, die genannten Nachteile zu beseitigen.

Diese Aufgabe wird dadurch gelöst, daß in der Rückenlehne mindestens ein mit dem fließfähigen Medium gefülltes, mit einem in der Kopfstütze angeordneten befüllbaren Element in Verbindung stehendes Reservoir angeordnet ist und mindestens ein Teil der Hülle dieses Reservoirs flexibel ist.

Der Vorteil der Erfindung besteht in der Hauptsache darin, daß eine an die Stärke des Heckaufpralls angepasste Wirkungsweise der Einrichtung gegeben ist.

## Beschreibung

Die Erfindung betrifft einen Sicherheits-Fahrzeugsitz mit einer Rückenlehne und einer der Rückenlehne zugeordneten Kopfstütze, wobei mindestens die dem Kopf des Insassen zugewandte Seite der Kopfstütze infolge einer crashbedingten Belastung der Rückenlehne nach vorn und nach oben oder nur nach vorn bewegt wird und der Kopfstütze ein durch ein fließfähiges Medium befüllbares Element zugeordnet ist.

Sitze in Kraftfahrzeugen sind in der Regel mit Kopfstützen versehen. Kopfstützen haben die Aufgabe, den Kopf des Insassen abzufangen, wenn dieser infolge eines Heckaufpralls nach hinten geschleudert wird. Dabei legt der Kopf relativ zum Körper einen Weg zurück, der je nach Einstellung der Kopfstütze und Sitzposition unterschiedlich lang ist. Je größer dieser Weg ist, desto größer ist die Gefahr von ernsthaften Verletzungen im Bereich der Halswirbelsäule.

Es sind eine Reihe von Lösungen bekannt, durch die dieser Gefahr begegnet werden soll. So wird in der DE 39 00 495 A1 eine Lösung vorgestellt, bei der ein Polsterelement in die Kopfstütze integriert ist. Im Fall eines Crashs wird durch einen Sensor kurz vor dem Zusammenstoß ein Auslösesignal gegeben. Daraufhin fährt das feder- oder pyrotechnisch angetriebene Polsterelement aus und stützt den Hinterkopf des Insassen ab.

In der DE 296 01 798 U1 wird vorgeschlagen, im oberen Teil der Rückenlehne einen zusammengefalteten Gassack unterzubringen. In Höhe des Kopfes des Insassen ist eine Gasquelle angeordnet, die bei Aktivierung infolge eines Zusammenpralls den Gassack aufbläst und so den Kopf abstützt. Es sind geeignete Mittel vorgesehen, den Gassack bei dessen Expansion so zu stabilisieren, daß er sich nur in die Richtung des Kopfes des Insassen ausdehnen kann. Als Gasquelle werden Gasgeneratoren eingesetzt, wie sie im Zusammenhang mit der Entwicklung von Airbags bekannt geworden sind. Die Aktivierung erfolgt ebenso wie dort mit den üblichen pyrotechnischen Mitteln.

Diese Lösungen haben den Nachteil, daß die freiwerdende Energie und damit die Ausfahr- bzw. die Aufblasgeschwindigkeit der jeweiligen Ausführung immer gleich ist. Da sowohl der Abstand zwischen Kopf und Kopfstütze als auch die Wucht, mit der der Kopf nach hinten geschleudert wird, je nach Situation unterschiedlich sind, kann diese Vorrichtung in bestimmten Fällen Verletzungen verursachen. Diese Gefahr besteht insbesondere immer dann, wenn der Abstand zwischen dem Hinterkopf und der Kopfstütze sehr gering ist, da die Beschleunigung der Kopfstütze in der Anfangsphase besonders hoch ist.

Aus der in der DE 297 10 511 U1 ist eine Lösung bekannt, bei der ein Gasgenerator auch optional in der Rückenlehne angeordnet werden kann und eine Verbindung zu dem in der Kopfstütze eingelegten Gassack aufweist.

In dieser Schritt ist auch vorgeschlagen worden, den vom Gasgenerator erzeugten Innendruck des Gassackes von der Aufprallintensität abhängig zu machen. Damit soll der oben genannten Verletzungsgefahr begegnet werden. Die Realisierung dieser Lösung ist jedoch mit einem sehr hohen technischen und ökonomischen Aufwand verbunden, da die dafür erforderlichen Sensoren und deren Auswertung sehr teuer sind.

Aus der US 5 378 043 ist eine Lösung bekannt, die nach einem anderen Prinzip arbeitet. Auch hier wird angestrebt, die Bewegung der Kopfstütze von der Aufprallintensität abhängig zu machen. Die Kopfstütze ist hierbei in einem Hebelsystem gelagert, wobei an einem Ende des Hebels die Kopfstützen und am gegenüberliegendem Ende eine Platte angeordnet ist. Die Platte ist in die Rückenlehne integriert.

Beim Aufprall wird der Körper des Insassen in die Polster und damit gegen die Platte gedrückt, die sich damit in Richtung Heck verschiebt und infolge der Hebelwirkung die Kopfstütze nach vorn, gegen den Kopf des Insassen, bewegt. Durch eine geeignete Ausgestaltung ist es möglich, die Bewegung der Kopfstütze so zu gestalten, daß gleichzeitig mit der Bewegung nach vorn eine Bewegung nach oben realisiert wird.

Nachteilig ist die lange Ansprechzeit des Systems. Ursache dafür ist, daß die Mechanik zu träge ist. Das führt auch zu einer relativ großen Gegenkraft an den Stellen, an denen die Kraft über den Rücken des Insassen eingeleitet wird. Die Kopfstütze bewegt sich verzögert nach vorn. Die Sicherheitswirkung ist daher gering.

Das System hat weiterhin den Nachteil, daß bei sehr starken Crashs die auslösende Kraft relativ hoch ist und somit die Kopfstütse zu stark beschleunigt wird. Dadurch kommt es zu einer erheblichen Krafteinwirkung beim Auftreffen der Kopfstütse auf den Hinterkopf des Insassen. Weiterhin benötigen die mechanischen Elemente relativ viel Platz. Dadurch wird die Kniefreiheit des hinten sitzenden Passagiers eingeschränkt bzw. sogar gefährdet.

Die Aufgabe der Erfindung besteht in der Beseitigung der oben angeführten Nachteile.

Die Aufgabe wird dadurch gelöst, daß in der Rückenlehne mindestens ein mit dem fließfähigen Medium gefülltes, mit dem befüllbarem Element in der Kopfstütze in Verbindung stehendes Reservoir angeordnet ist und mindestens ein Teil der Hülle dieses Reservoirs flexibel ist.

In der weiteren Ausgestaltung der Erfindung ist die Verbindung zwischen dem Reservoir und dem durch das fließfähige Medium befüllbaren Element als ein Überströmkanal ausgebildet. Im Überströmkanal oder an den Übergängen zum oder vom Überströmkanal sind Rückschlagventile angeordnet, die bei einem auf das System abgestimmten Initialisierungsdruck ansprechen. Die Rückschlagventile lassen zum Zwecke des Ausgleich nach erfolgter Aktivierung einen geringen Leckstrom zu.

Als Reservoir kann sowohl ein hermetisch abgeschlossenes System Anwendung als auch ein offenes System Anwendung finden.

Bei einem hermetisch abgeschlossenen System wird der Innendruck durch geeignete Mittel aufrecht erhalten. Das System ist vorzugsweise mit einem trockenen Gas oder mit Luft gefüllt.

Bei einem offenes System ist das Reservoir vorzugsweise mit Luft gefüllt. Die Hülle besteht aus semipermeablen Wänden, einem atmungsaktiven Material, das einen hohen Luftwiderstand bei geringen Leckverlusten bietet. Das Reservoir kann so gebildet werden, daß mindestens zwei Abspannungen oder Federungen aufgespannt sind, die dessen Volumen aufrecht erhalten.

In einer anderen Ausführung der Erfindung ist das Reservoir hinter einer beweglichen Platte angeordnet.

Das Reservoir kann auch durch eine Stützkonstruktion aus einem kompressiblen Material, vorzugsweise einem offenporigen Schaum, aufgespannt werden. Die Stützkonstruktion weist Strömungskanäle auf, die mit dem durch das fließfähige Medium befüllbare Element in Verbindung stehen.

Das befüllbare Element kann als ein in Richtung des Kopfes des Insassen ausfahrbares Kissen ausgebildet sein, das aus einem flexiblen Gewebe besteht, das eine geringe Elastizität aufweist. Es ist aber auch möglich, das Kissen aus einem elastischen Material zu gestalten.

Statt des Kissens kann auch ein in Richtung des Kopfes ausfahrbarer, durch Verstärkungsringe druckfest gemachter Faltenbalg verwendet werden, der vorzugsweise einen runden Querschnitt aufweist.

In einer weiteren Ausgestaltung der Erfindung wird vorgeschlagen, zur Abstützung des Kopfes ein ausfahrbares Polsterelement anzuordnen, das durch einen innerhalb der Kopfstütze angeordneten Kolben bei Druckbeaufschlagung angetrieben wird. Wenn der Kontakt zum Kopf des Insassen hergestellt ist, wird der Kolben verriegelt. Der Kolben besteht aus einem leichten Material, vorzugsweise Kunststoff.

In einer weiteren Ausgestaltung der Erfindung wird vorgeschlagen, eine Abstützeinrichtung anzuordnen, die das Rutschens des Insassen entlang der schräg gestellten Rückenlehne nach oben verhindert und damit den Kopf im Bereich der Kopfstütze hält. Dazu wird das Reservoir mit zwei oberhalb der Schulter beiderseits des Halses des Insassen angeordneten Kammern verbunden. Als Abstützeinrichtung können auch ausfahrbare Polsterelemente vorgesehen werden.

Ein Vorteil der Erfindung besteht darin, daß eine an die Stärke des Heckaufpralls angepasste Wirkungsweise gegeben ist. Je stärker der Heckaufprall ist, desto mehr Gasvolumen wird verdrängt. Das hat einen unmittelbaren Einfluß auf die räumliche Verlagerung der Wirkfläche der Kopfstütze und auf die der Bewegung des Kopfes entgegen wirkenden Kräfte. Den Beschleunigungskräften des nach hinten geschleuderten Kopfes wird somit durch eine angemessene Gegenkraft begegnet.

Das Lösungsprinzip ist kostengünstig zu realisieren, da auf eine aufwendige Sensorik und deren Auswertetechnik verzichtet werden kann.

Ein weiterer Vorteil der Erfindung besteht darin, daß eine sehr kurze Ansprechzeit erreichbar ist. Das liegt darin begründet, daß das die Kraftübertragung übernehmende fließfähige Medium mit seiner geringen Masse sehr schnell beschleunigt werden kann. Im Gegensatz zu den im Stand der Technik gewürdigten mechanischen Systemen kann eine unnötige Belastung der Wirbelsäule im Rückenbereich vermieden werden. Die Gegenkraft, die dort durch die trägen mechanischen Elemente zur Krafteinleitung gegeben ist, ist bei der Erfindung vernachlässigbar.

Es bietet sich die vorteilhafte Möglichkeit, das mit Gas gefüllte Reservoir an einer beliebigen, für die Funktion günstigen Stelle in der Rückenlehne anzubringen. So kann sich das Reservoir auch über den Bereich der gesamten Rückenlehne erstrecken. Das bewirkt, daß der Rücken des Insassen bei einem Heck-Crash besonders gleichmäßig belastet wird. Eine schädliche Relativbewegung der einzelnen Wirbelsegmente zueinander kann dadurch weitreichend verhindert werden.

Weiterhin kann das Reservoir so ausgebildet werden, daß durch eine optimierte Energieaufnahme eine Dämpfung der Bewegung des Insassen bei der Verlagerung seines Körpers in Richtung Fahrzeugsitz erfolgen und somit in das Belastungsniveau gesenkt werden kann.

Das in die Rückenlehne eingebettete Reservoir kann so gestaltet werden, daß es zumindest teilweise Komfort-Funktionen übernommen kann. Damit wird auch insgesamt die Masse gegenüber im Vergleich zu konventionellen Fahrzeugsitzen verringert.

Im Rahmen der Ausgestaltung der Erfindung bieten sich weitere vorteilhafte Möglichkeiten. So sind verschiedene Wirkungsweisen der Kopfstützenfunktion im Falle eines Heck-Crashs möglich. Neben der mit der Verlagerung der Wirkfläche der Kopfstütze nach vorn kombinierten Verlagerung nach oben kann auch die Expansion bzw. das Herausfahren von Abstützpolstern oberhalb der Schultern realisiert werden, was eine Aufsteigen des Insassen entlang der schräg gestellten Rückenlehne verhindert.

Vorteilhaft ist auch, daß nach erfolgter Betätigung das System nicht zerstört ist, sondern ohne Hilfsmittel oder mit dem Einsatz weniger aufwendiger Hilfsmittel in seine Ausgangslage zurückkehren kann.

Die Erfindung wird nachfolgend an Hand von Ausführungsbeispielen beschrieben. Die Zeichnungen haben folgende Bedeutung.
- Figur 1: Sicherheits-Fahrzeugsitz mit nicht betätigter Sicherheitseinrichtung, schematische Darstellung
- Figur 2: Sicherheits-Fahrzeugsitz mit nicht betätigter Sicherheitseinrichtung, Blick in Richtung Fahrzeugheck
- Figur 3: Aktivierter Sicherheits-Fahrzeugsitz, Zustand unmittelbar nach einem Heckaufprall
- Figur 4: Sicherheits-Fahrzeugsitz mit Rückschlagventil im Überströmkanal, am Beginn des Heckaufprall-Phase
- Figur 5: Sicherheits-Fahrzeugsitz mit Rückschlagventil im Überströmkanal, am Ende des Heckaufprall-Phase
- Figur 6: Sicherheits-Fahrzeugsitz mit einem hermetisch abgeschlossenen Reservoir (Querschnitt A-A der Figur 2) im Zustand des maximalen Drucks des Insassen auf die Rückenlehne am Ende der Heckaufprallphase
- Figur 7: Darstellung der Kopfstütze im nicht betätigtem Zustand (Querschnitt)
- Figur 8: Sicherheits-Fahrzeugsitz nach Figur 6 im betätigtem Zustand, maximaler Druck des Insassen auf die Rückenlehne am Ende der Heckaufprallphase (Querschnitt A-A der Figur 2)
- Figur 9: Darstellung der Kopfstütze am Ende der Heckaufprall-Phase (Querschnitt)
- Figur 10: Sicherheits-Fahrzeugsitz mit Abspannungen (Querschnitt)
- Figur 11: Sicherheits-Fahrzeugsitz nach Figur 10, im Zustand des maximalen Drucks
- Figur 12: Sicherheits-Fahrzeugsitz mit Platte vor dem Reservoir (Querschnitt)
- Figur 13: Sicherheits-Fahrzeugsitz mit einer Stützkonstruktion aus kompressiblem Material, schematische Darstellugn einer Ansicht von vorn.
- Figur 14: Sicherheits-Fahrzeugsitz nach Figur 14, Detailzeichnung mit Darstellung der Strömungsverhältnisse im Falle eines Heckaufpralls
- Figur 15: Sicherheits-Fahrzeugsitz nach Figur 14, Darstellung der Luftsammelkanäle im Querschnitt
- Figur 16: Sicherheits-Fahrzeugsitz mit Abstützpolster oberhalb der Schulter, Blick in Richtung Fahrzeugheck
- Figur 17: Sicherheits-Fahrzeugsitz mit Abstützpolster mit nicht betätigter Sicherheitseinrichtung
- Figur 18: Sicherheits-Fahrzeugsitz mit Abstützpolster am Ende der HeckaufprallPhase
- Figur 19: Kopfstütze vor dem Aufprall
- Figur 20: Kopfstütze unmittelbar nach dem Aufprall, schematische Darstellung eines Faltenbalges als ausfahrbares Element
- Figur 21: Detail von Figur 20
- Figur 22: Kopfstütze unmittelbar nach dem Aufprall, schematische Darstellung eines teleskopartigen ausfahrbaren Elementes
- Figur 23: Detail zu Figur 22

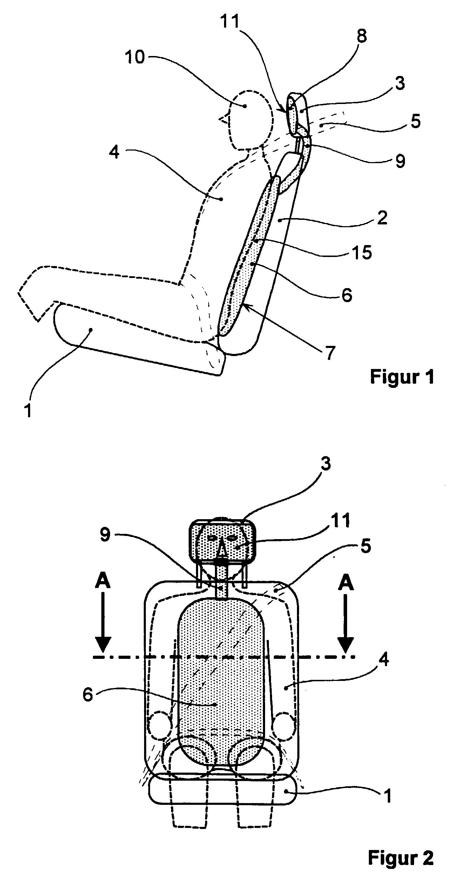

Aus der Figur 1 in Verbindung mit der Figur 2 sind als wesentliche Teile eines Fahrzeugsitzes ein Sitzpolster 1, eine Rückenlehne 2 und eine Kopfstütze 3 zu erkennen. In der Zeichnung ist schematisch ein Insasse 4 in normaler Sitzposition, mit einem üblichen Sicherheitsgurt 5 gesichert, dargestellt.

Als Teil der Rückenlehne 2 ist ein Reservoir 6 angeordnet. Darunter wird eine Kammer verstanden, die aus einer Hülle 7 besteht, die mit einem fließfähigem Medium 15 gefüllt ist. Die Hülle 7 ist zumindest teilweise flexibel. Als fließfähiges Medium 15 wird ein trockenes Gas, vorzugsweise Luft, eingesetzt.

Das Reservoir 6 ist mit einem in der Kopfstütze 3 angeordneten befüllbarem Element 8 verbunden, das eine in Richtung des Kopfes 10 des Insassen 4 expandierbare Kontaktfläche 11 aufweist. Die Verbindung zwischen der Kopfstütze 3 und dem befüllbaren Element 8 erfolgt über einen Überströmkanal 9, der einen Übertritt des fließfähigen Mediums 15 in das befüllbare Element 8 zuläßt.

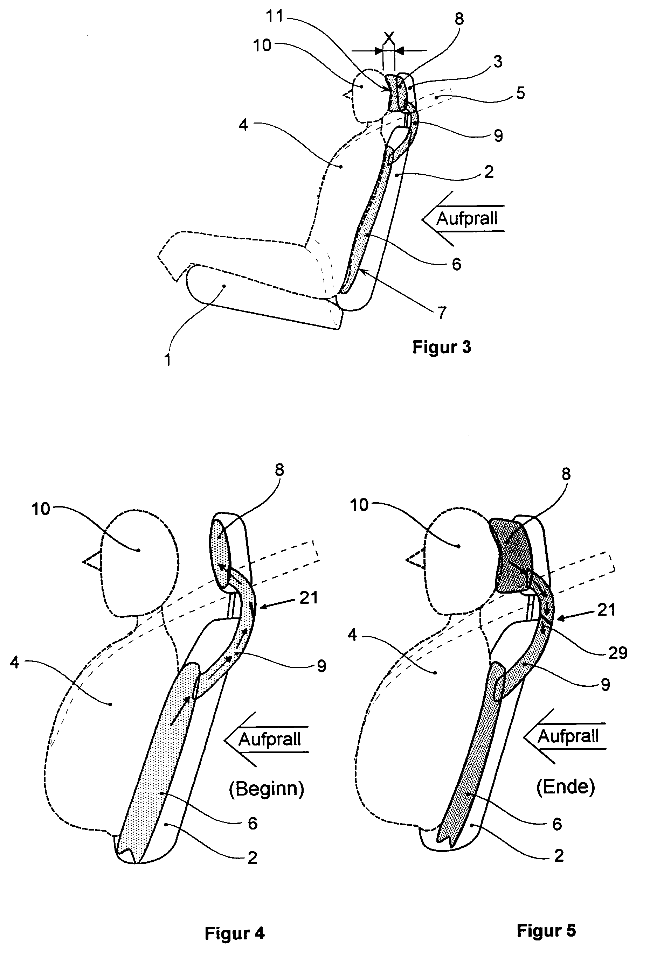

An Hand der Figur 3 wird die Funktion der erfindungsgemäßen Einrichtung im Falle eines Heckaufpralls dargestellt. Dabei wird der Insasse 4 durch seine träge Masse in die Rückenlehne 2 gepreßt und drückt das Reservoir 6 zusammen. Der Druck im Inneren des Reservoirs wird schlagartig erhöht, so das ein Druckausgleich zwischen dem Reservoir 6 und dem befüllbaren Element 8 in der Kopfstütze 3 bei gleichzeitiger Komprimierung des Gases erfolgt. Dabei weicht das Gas über den Überströmkanal 9 in das befüllbare Element 8 aus. Dabei wird die Kontaktfläche 11 um den Stellweg x in Richtung des Kopfes 10 des Insassen 4 verschoben.

In den Figuren 4 und 5 wird eine Einrichtung gezeigt, bei der im Überströmkanal 9 mindestens ein Rückschlagventil 21 angeordnet ist. Dieses sorgt am Beginn der Aufprall-Phase (Figur 4) für das ungehinderte Einströmen des Gases in das befüllbare Element 8. Die Strömungsrichtung des Gases ist in der Figur 4 durch Pfeile angedeutet. Nach erfolgtem Druckausgleich, am Ende der Aufprall-Phase (Figur 5), versperrt das Rückschlagventil 21 den Überströmkanal und verhindert so das Zurückströmen des Gases in das Reservoir 6 und sichert somit die erreichte Stellung bzw. den Stellweg x.

Die Rückschlagventile 21 können so ausgebildet sein, daß sie zum Erreichen einer gezielten Dämpfung des Aufschlags und /oder um ein selbsttätiges Zurückstellens des Systems zu ermöglichen, definierte Leckströme 29 zulassen.

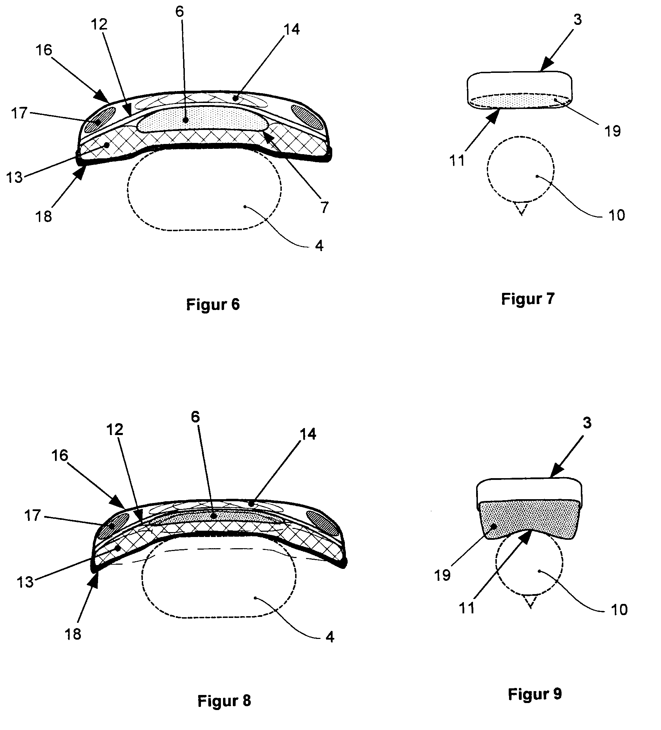

Die Figur 6 zeigt eine der möglichen Ausgestaltungen der Rückenlehne 2. Hier ist der Zustand vor dem Crash, also der normale Betriebszustand, an Hand einer Zeichnung des Querschnitts A-A der Figur 2 dargestellt. Das Reservoir 6 liegt eingebettet zwischen einer Abspannung 12 und einer Lage Komfortschaum 13. Die Hülle 7 besteht aus einem nahezu luftundurchlässigen flexiblem Material, was das Reservoir 6 weitgehend hermetisch gegenüber der Umgebungsluft abschließt. Durch geeignete Mittel, z.B. einem hier nicht dargestellten Kompressor werden Leckverluste im Reservoir 6 ausgeglichen. Es ist auch möglich, dadurch den Komfort an die Bedürfnisse des Insassen 4 anzupassen.

Hinter der Abspannung 12 befindet sich eine Lage harter Abstützschaum 14. Die gesamte Rückenlehne 2 wird durch eine Hartschale 16 aus Metall oder Thermoplast umschlossen und durch einen tragenden Metallrahmen 17, einem Teil des des Fahrzeugsitz-Gestelles, gestützt.

Auf der Vorderseite ist die Rückenlehne 2 an ihrer Kontaktseite zum Insassen 4 mit einem Bezug 18 versehen.

Die Größe des Reservoirs 6 richtet sich nach den erforderlichen Druck-Volumenverhältnissen und nach der konkreten Auslegung der Größe des befüllbaren Elementes und des Querschnitts des Überströmkanals 9.

Die Figur 7 zeigt einen Schnitt durch die Kopfstütze 3. Als befüllbares Element 8 wird hier vorteilhaft ein mit trockenes Gas, insbesondere mit Luft, gefülltes Kissen 19 eingesetzt, das im Falle eines Crashs expandiert und die Kontaktfläche 11 in Richtung Kopf 10 verschiebt. Ein trockenes Gas wird verwendet, um die Bildung von Stock- und Schimmelflecken auszuschließen und um eine Kondensatbildung zu vermeiden. Die Zeichnung zeigt den Zustand bei nicht betätigter Sicherheitseinrichtung. Dabei ist das Kissen 19 im nicht aktiviertem Zustand in der Kopfstütze 2 aufbewahrt und im Crashfall in Richtung Kopf 10 ausfahrbar. Das Material des Kissens 19 ist vorzugsweise ein Gewebe mit einer geringen Elastizität, das zusammengedrückt oder zusammengefaltet wenig Platz beansprucht und im Einsatzfall die gewünschte Form annimmt.

Je nach Anwendungsfall können aber auch elastische Materialien verwendet werden. Dadurch ist es möglich, daß das Kissen 19 nach der Betätigung ohne Anwendung zusätzlicher Mittel in die Ausgangslage zurückkehren kann. Auch kann durch die elastische Ausbildung der Aufprall des Kissens 19 auf den Kopf 10 des Insassen 4 weicher gestaltet werden.

Die Figuren 8 und 9 zeigen diese Anordnung im Moment der Endphase des Zusammendrückens. Da der Komfortschaum 13 mit einer definierten Elastizität ausgestattet ist, wird auch dieser zusammengedrückt. Dessen Formveränderung ist aber nur geringfügig, so daß die Energie überwiegend auf das Reservoir 6 übertragen wird.

Aus der Figur 9 ist erkennbar, daß das Kissen 19 unter dem Einfluß des einströmenden Gases und der damit erfolgenden Druckerhöhung expandiert und die Kontaktfläche 11 der Kopfstütze 3 in Richtung des Kopfes 10 verschiebt. Die Form des Kissens 19 ist so gestaltet, daß sich die Kontaktfläche 11 im expandiertem Zustand dem Hinterkopf des Insassen 4 anpaßt

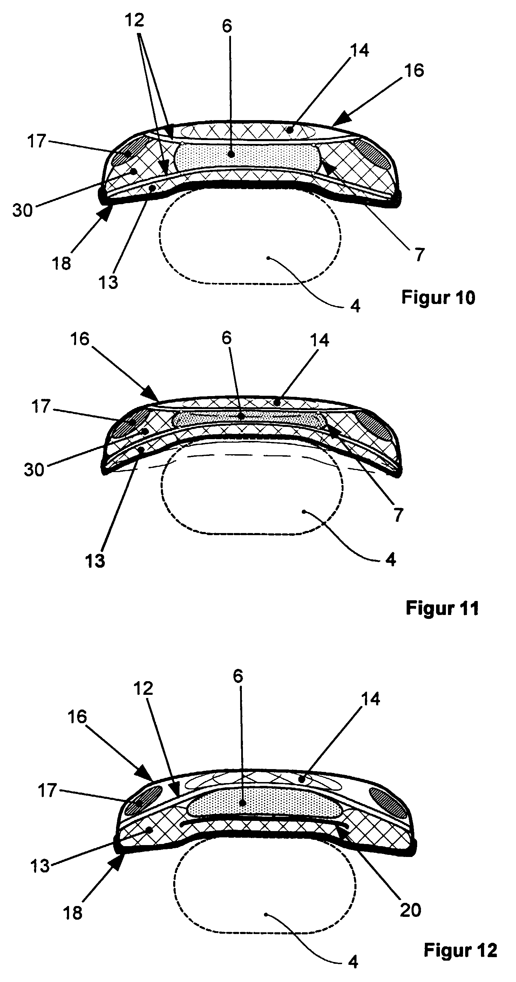

In den Figur 10 und 11 wird eine weitere vorteilhaften Ausführung des Reservoirs 6 gezeigt. Es handelt sich dabei um ein offenes System, was durch mindestens zwei Abspannungen 12, Federungen oder Schaumlagen 30 während des normalen Betriebszustandes in seiner Lage und Form gehalten wird. Im Crashfall (Figur 11) werden diese Abspannungen 12 deformiert und somit das Reservoir wie oben beschrieben zusammengedrückt. Nach Beendigung dieser Phase kehren die Abspannungen 12 in ihre Ausgangslage zurück und spannen das Reservoir 6 wieder auf, so daß die ursprünglichen Raum- und Druckverhältnisse wieder hergestellt werden.

Das Innere des Reservoirs 6 steht bei den offenen Systemen bedingt mit der Umgebungsluft in Verbindung. Dazu wird für die Hülle 7 ein semipermeables Material gewählt. Das heißt, die Hülle 7 besteht aus einem Material, vorzugsweise einem Gewebe, was bei langsamen Strömungsgeschwindigkeiten luftdurchlässig ist. Bei hohen Strömungsgeschwindigkeiten bietet dieses Material dagegen bei geringen Leckverlusten einen hohen Strömungswiderstand. Dadurch ist die Hülle atmungsaktiv, die Feuchtigkeit wird abgeleitet und eine Stock- oder Schimmelbildung vermieden. Erfolgt ein plötzliche und kurze Druckerhöhung infolge des Heckaufpralls, dann hält das Gewebe diesem Druck stand und erfüllt seine Funktion. Für diesen Einsatzfall kommen insbesondere atmungsaktive Materialien in Frage, wie sie in der Sport- und Freizeitbekleidung genutzt werden.

Das vorteilhafte an dieser Lösung ist, daß diese Anordnungen im Gegensatz zu hermetisch abgeschlossenen Systemen keine Mittel zum Aufrechterhalten des Drucks im Innern benötigen und unabhängig von Luftdruck- und Temperaturschwankungen sind. Auftretende geringe Undichtigkeiten haben keinen nennenswerten Einfluß auf die Funktion.

Die Figur 12 zeigt eine weitere Ausführungsform. Hier ist zwischen dem Reservoir 6 und der Komfortschaumlage 13 eine bewegliche Platte 20 angeordnet. Diese kann, falls erforderlich, die große Fläche des Rückens des Insassen 4 auf einen kleinen Querschnitt des Gasvolumens umsetzen und damit größere Drücke erzeugen. In der Zeichnung ist das Reservoir als ein hermetisch geschlossenes System dargestellt. Es ist aber auch möglich, diesen Einsatzfall als ein offenes System auszuführen.

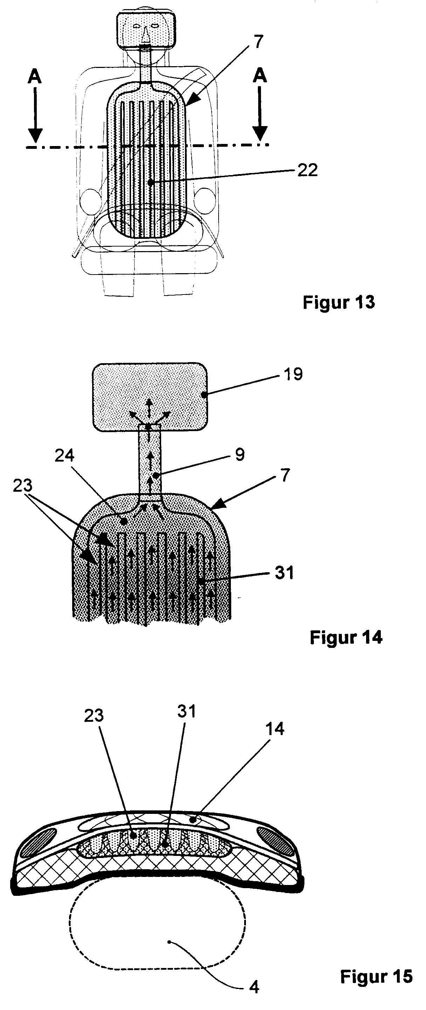

In den Figuren 13 bis 15 wird ein weiteres offenes System beschrieben. Hier umschließt die Hülle 7 eine Stützkonstruktion 22 aus einem kompressiblen Material, zum Beispiel einem Schaumstoff 31. Die Stützkonstruktion ist so ausgebildet, daß Strömungskanäle 23 verbleiben, die in einem Sammelkanal 24 münden. Der Sammelkanal 24 geht in den Überströmkanal 9 über.

Im Falle eines Heckaufpralls wird der Insasse analog den vorhergehenden Beispielen in die Rückenlehne 2 gedrückt und verengt dadurch die Strömungskanäle 23. Die Luft wird in Richtung der in der Figur 14 dagestellten Pfeile über den Sammelkanal 24 und dem Überströmkanal 9 in das Kissen 19 gefördert, das auf die bereits beschriebene Weise die Kontaktfläche 11 in Richtung Kopf 10 verlagert.

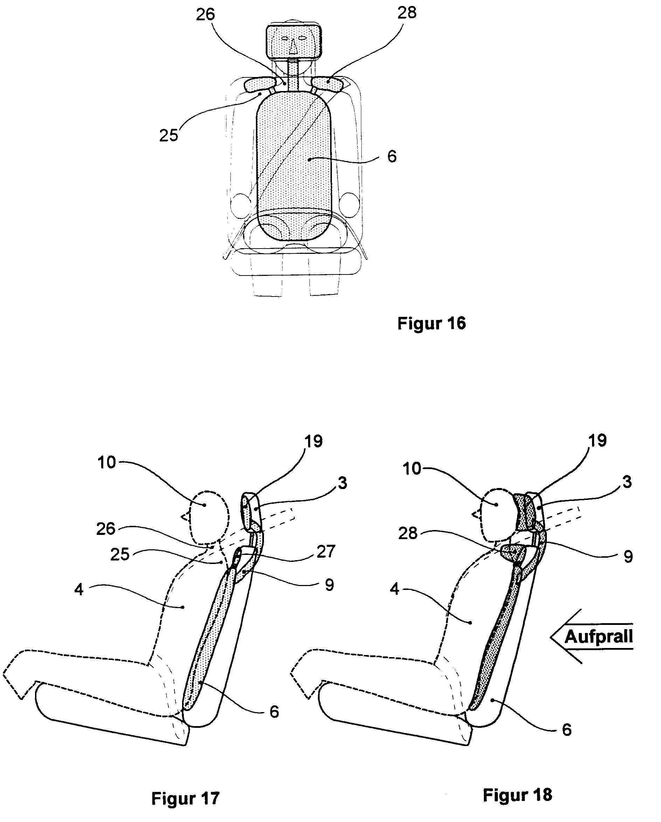

Aus den Figuren 16 bis 18 ist eine weitere Ausgestaltung der Erfindung ersichtlich. Dabei ist im Bereich oberhalb der Schulter 25 des Insassen 4, links und rechts des Halses 26, je eine Kammer 27 vorgesehen. Die Kammern 27 werden in der oben beschriebenen Weise im Fall eines Heckaufpralls durch das Gas befüllt, so daß diese expandieren und die Abstützpolster 28 bilden. Diese stützen den Körper des Insassen 4 nach oben ab, da dieser das Bestreben hat, an der schräg gestellten Rückenlehne 2 aufwärts zu gleiten. Auf diese Weise kann dieser Bewegung zusätzlich begegnet werden und der Kopf 10 kann im Wirkungsbereich der expandierenden Kopfstützen 3 gehalten werden.

Es ist auch möglich, das mit Gas gefüllte Kissen 19 durch andere (hier nicht dargestellte) ausfahrbare Elemente zu ersetzen, wie z.B. durch gepolsterte Stützen. Diese werden vorzugsweise über Kolben betätigt, die durch das Gas beaufschlagbar sind.

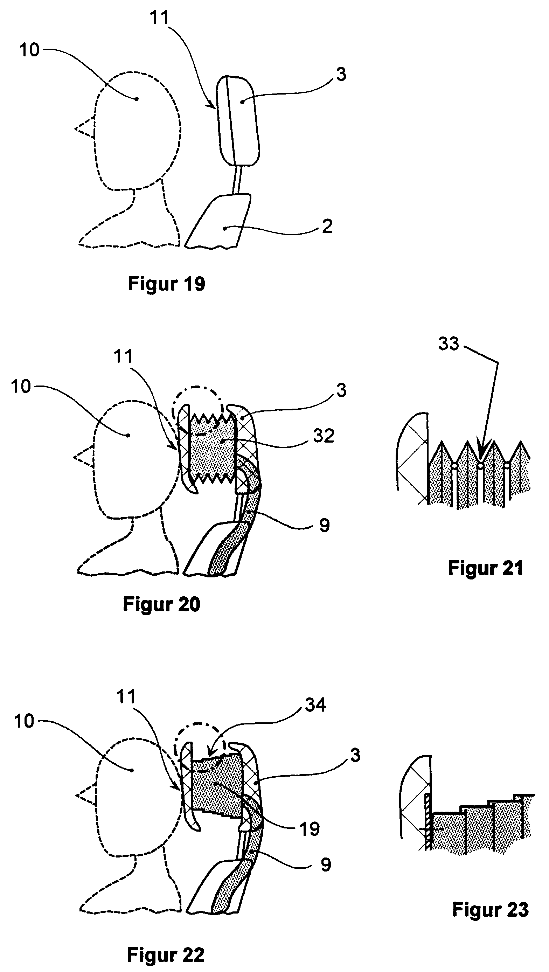

In den Figuren 19 und 20 wird eine weitere Ausführungsvariante gezeigt. Dabei handelt es sich um einen Faltenbalg 32, der durch Verstärkungsringe 33 druckfest wird. Der Faltenbalg 32 hat vorzugsweise einen runden Querschnitt.

Die Figur 19 zeigt eine die Einrichtung im nicht betätigtem Zustand. Bei Betätigung, also beim Heckaufprall, bewegt sich die Kontaktfläche 11 infolge des erhöhten Druckniveaus im befüllbaren Element 8 in Richtung des Kopfes (siehe hierzu Figur 20). Die Verstärkungsringe 33 sind so angeordnet, daß ausschließlich die Bewegung der Kontaktfläche 11 in die Richtung des Kopfes 10 möglich ist.

Die Figur 21 zeigt die Anordnung der Verstärkungsringe im Detail.

In der Figur 22 ist der Faltenbalg durch eine teleskopartige Anordnung mehrerer Ringe 34 ersetzt. Die Ringe 34 sind entweder gegeneinander abgedichtet oder das bereits beschriebene Kissen 19 ist als befüllbares Element im Inneren der Ringe 34 angeordnet.

Die Figur 23 zeigt die Anordnung der Ringe 34 im Detail.

Es ist auch möglich, ein ausfahrbares Polsterelement, das mit einem Kolben in Verbindung steht, einzusetzen. Als Material für den Kolben wird ein leichter Werkstoff, vorzugsweise Kunststoff, eingesetzt. Der Kolben ist über das Gas beaufschlagbar und realisiert die gewünschte Bewegung. Er wird in der Stellung verriegelt, in der der Kontakt zum Kopf des Insassen hergestellt ist.

Eine Anordnung zum Verriegeln der jeweilig erreichten Lage, in der der Kontakt zum Kopf 10 hergestellt ist, kann analog für alle oben beschriebenen Ausführungsvarianten bzw. auch für die Betätigung der Abstützpolster vorgesehen werden.

### Bezugszeichenliste

- 1: Sitzpolster
- 2: Rückenlehne
- 3: Kopfstütze
- 4: Insasse
- 5: Sicherheitsgurt
- 6: Reservoir
- 7: Hülle
- 8: befüllbares Element
- 9: Überströmkanal
- 10: Kopf
- 11: Kontaktfläche
- 12: Abspannung
- 13: Komfortschaum
- 14: Abstützschaum
- 15: Fließfähiges Medium
- 16: Hartschale
- 17: Metallrahmen
- 18: Bezug
- 19: Kissen
- 20: Platte
- 21: Rückschlagventil
- 22: Stützkonstruktion
- 23: Strömungskanäle
- 24: Sammelkanal
- 25: Schulter
- 26: Hals
- 27: Kammer
- 28: Abstützpolster
- 29: Leckstrom
- 30: Schaumlage
- 31: Schaumstoff
- 32: Faltenbalg
- 33: Verstärkungsringe
- 34: Ringe

## Patentansprüche

1. Sicherheits-Fahrzeugsitz mit einer Rückenlehne und einer der Rückenlehne zugeordneten Kopfstütze, wobei mindestens die dem Kopf des Insassen zugewandte Seite der Kopfstütze infolge einer crashbedingten Belastung der Rückenlehne nach vorn und/oder nach oben bewegt wird und der Kopfstütze ein durch ein fließfähiges Medium befüllbares Element zugeordnet ist, dadurch gekennzeichnet, daß in der Rückenlehne (2) mindestens ein mit dem fließfähigen Medium (15) gefülltes, mit dem befüllbarem Element (8) in Verbindung stehendes Reservoir (6) angeordnet ist und mindestens ein Teil der Hülle (7) dieses Reservoirs (6) flexibel ist.

2. Sicherheits-Fahrzeugsitz nach Anspruch 1, dadurch gekennzeichnet, daß als Verbindung zwischen dem Reservoir (6) und dem durch das fließfähige Medium (15) befüllbaren Element (8) ein Überströmkanal (9) angeordnet ist.

3. Sicherheits-Fahrzeugsitz nach Anspruch 1, dadurch gekennzeichnet, daß als Reservoir (6) ein hermetisch abgeschlossenes System Anwendung findet.

4. Sicherheits-Fahrzeugsitz nach den Ansprüchen 1 und 3, dadurch gekennzeichnet, daß im Falle von Leckverlusten und zum Zwecke der Komfortanpassung an die Bedürfnisse des Insassen 4 geignete Mittel, z. B. Kompressoren, dem Reservoir (6) zugeordnet sind.

5. Sicherheits-Fahrzeugsitz nach den Ansprüchen 1, 3 und 4, dadurch gekennzeichnet, daß das hermetisch abgeschlossene System vorzugsweise mit einem trockenen Gas oder Luft gefüllt ist.

6. Sicherheits-Fahrzeugsitz nach den Anspruch 1, dadurch gekennzeichnet, daß das Reservoir (6) als ein offenes System ausgelegt ist.

7. Sicherheits-Fahrzeugsitz nach nach Ansprüchen 1 und 6 dadurch gekennzeichnet, daß das als offenes System ausgelegte Reservoir (6) vorzugsweise mit Luft gefüllt ist.

8. Sicherheits-Fahrzeugsitz nach den Ansprüchen 1, 6 und 7, dadurch gekennzeichnet, daß das Reservoir (6) zumindest teilweise eine Hülle (7) aus semipermeablen Material aufweist, das einen hohen hydraulischen Widerstand bei geringen Leckverlusten bietet.

9. Sicherheits-Fahrzeugsitz nach Anspruch 8, dadurch gekennzeichnet, daß das semipermeable Material atmungsaktiv ist.

10. Sicherheits-Fahrzeugsitz nach den Ansprüchen 8 und 9, dadurch gekennzeichnet, daß als atmungsaktives Material für die Hülle (7) Stoffe Anwendung finden, wie sie insbesondere in der Sport- und Freizeitbekleidung genutzt werden.

11. Sicherheits-Fahrzeugsitz nach den Ansprüchen 1 bis 10, dadurch gekennzeichnet, daß das Reservoir (6) durch mindestens zwei Abspannungen (12) oder Federungen aufgespannt wird, die dessen Volumen aufrecht erhalten.

12. Sicherheits-Fahrzeugsitz nach den Ansprüchen 1 und 3 bis 11, dadurch gekennzeichnet, daß zwischen der druckbeaufschlagten Fläche der Rückenlehne (2) und dem Reservoir (6) eine bewegliche Platte (20) angeordnet ist.

13. Sicherheits-Fahrzeugsitz nach Anspruch 1 und 3 bis 10, dadurch gekennzeichnet, daß das Reservoir (6) durch eine Stützkonstruktion (22) aus einem kompressiblen Material aufgespannt ist.

14. Sicherheits-Fahrzeugsitz nach Anspruch 13, dadurch gekennzeichnet, daß die Stützkonstruktion (22) Strömungskanäle (23) aufweist, die mit dem durch das fließfähiges Medium (15) befüllbare Element (8) in Verbindung stehen.

15. Sicherheits-Fahrzeugsitz nach Anspruch 13, dadurch gekennzeichnet, daß das kompressible Material ein offenporiger Schaum ist.

16. Sicherheits-Fahrzeugsitz nach den Ansprüchen 1 und 2, dadurch gekennzeichnet, daß im Überströmkanal (9) oder an den Übergängen zum oder vom Überströmkanal (9) mindestens ein Rückschlagventil (21) angeordnet ist, das bei einem auf das System abgestimmten Initialisierungsdruck anspricht.

17. Sicherheits-Fahrzeugsitz nach den Ansprüchen 1,2 und 16, dadurch gekennzeichnet, daß das Rückschlagventil (21) eine ungewollte Rückstellung der Wirkfläche 11 verhindert.

18. Sicherheits-Fahrzeugsitz nach Ansprüchen 1, 2 16 und 17, dadurch gekennzeichnet, daß die Rückschlagventile (21) zum Zwecke der Rückstellung oder Dämpfung des Aufschlages des Kopfes nach erfolgter Aktivierung einen geringen Leckstrom zulassen.

19. Sicherheits-Fahrzeugsitz nach Anspruch 1, dadurch gekennzeichnet, daß das durch ein fließfähiges Medium (15) befüllbares Element (8) ein in Richtung des Kopfes (10) des Insassen (4) ausfahrbares Kissen (19) ist.

20. Sicherheits-Fahrzeugsitz nach Anspruch 19, dadurch gekennzeichnet, daß das Kissen (19) aus einem nicht dehnfähigen, flexiblen Gewebe besteht, das eine geringe Elastizität aufweist.

21. Sicherheits-Fahrzeugsitz nach Anspruch 19, dadurch gekennzeichnet, daß das Kissen (19) aus einem elastischen Material besteht.

22. Sicherheits-Fahrzeugsitz nach Anspruch 1, dadurch gekennzeichnet, daß das durch ein fließfähiges Medium (15) befüllbares Element (8) ein in Richtung des Kopfes (10) des Insassen ausfahrbarer, durch Verstärkungsringe (33) druckfest gemachter Faltenbalg (32) ist.

23. Sicherheits-Fahrzeugsitz nach Anspruch 22, dadurch gekennzeichnet, daß der Faltenbalg (32) vorzugsweise einen runden Querschnitt aufweist.

24. Sicherheits-Fahrzeugsitz nach Anspruch 1, dadurch gekennzeichnet, daß das durch ein hießfähiges Medium (15) befüllbare Element (8) ein mit einen in Richtung des Kopfes (10) des Insassen (4) ausfahrbarem Polsterelement in Verbindung steht.

25. Sicherheits-Fahrzeugsitz nach Anspruch 24, dadurch gekennzeichnet, daß das Polsterelement durch einen innerhalb der Kopfstütze (3) angeordneten Kolben beaufschlagbar ist, der aus leichtem Material, vorzugsweise Kunststoff, besteht.

26. Sicherheits-Fahrzeugsitz nach Anspruch 1, dadurch gekennzeichnet, daß eine Abstützeinrichtung angeordnet ist, die das Rutschens des Insassen (4) entlang der schräg gestellten Rückenlehne (2) nach oben verhindert und damit den Kopf im Bereich der Kopfstütze (2) hält, derart, daß das mit dem fließfähigen Medium (15) gefülltes Reservoir (6) mit zwei oberhalb der Schulter (25) beiderseits des Halses (26) des Insassen (4) angeordneten Kammern (27) verbunden ist.

27. Sicherheits-Fahrzeugsitz nach Anspruch 26, dadurch gekennzeichnet, daß die mit dem fließfähigen Medium (15) befüllbare Reservoir (6) mit ausfahrbaren Abstützpolstern in Verbindung steht.

28. Sicherheits-Fahrzeugsitz nach den vorhergehenden Ansprüchen, dadurch gekennzeichnet, daß die Stellvorrichtung zum Verstellen der Wirkfläche 11 bzw. zum Verstellen der Abstützpolster in in der Stellung verriegelt wird, in der der Kontakt zum Kopf (10) des Insassen (4) hergestellt ist bzw in der die Abstützpolster ausgefahren sind.
